# EUROPÄISCHE PATENTSCHRIFT

(11) **EP 0 937 377 B1**
(45) Veröffentlichungstag und Bekanntmachung des Hinweises auf die Patenterteilung: **28.08.2002**
(21) Anmeldenummer: 99101777.3
(22) Anmeldetag: 12.02.1999
(51) Int. Cl.: A01C 3/02, B01F 7/00

(54) **Vorrichtung zum Homogenisieren von Gülle**
Slurry agitator-mixer
Appareil pour homogénéiser du lisier

(30) Priorität: 14.02.1998 DE 19806163; 12.09.1998 DE 19841783
(43) Veröffentlichungstag der Anmeldung: 25.08.1999
(73) Patentinhaber: Reck, Anton, 88422 Betzenweiler (DE)
(72) Erfinder: Reck, Anton, 88422 Betzenweiler (DE)
(74) Vertreter: Patentanwälte Eisele, Otten & Roth

(56) Entgegenhaltungen:
- EP-A- 0 008 462
- CH-A- 644 279
- DE-A- 2 420 605
- DE-U- 8 420 281
- DE-U- 9 300 514

## Beschreibung

Die Erfindung betrifft eine Vorrichtung zum Homogenisieren von Gülle nach dem Oberbegriff des Anspruchs 1.

### Stand der Technik

In Schweine- und Kuhställen mit Spaltenböden wird die Gülle in Sammelgruben und/oder Kanälen unter den Böden gesammelt. Im Laufe der Zeit bildet sich normalerweise in der gesammelten Gülle zunächst am Boden der Sammelgrube eine Sinkschicht, auf die eine Flüssigkeitsschicht folgt, die ihrerseits von einer Schwimmschicht aus festeren Bestandteilen überdeckt wird. Diese Schwimmschicht neigt zu Verkrustungen. Um durch die Krustenbildung Verstopfungen beispielsweise in den Kanälen unter dem Spaltenboden zu vermeiden und ggf. zur Vorbereitung der Gülle für die Entnahme aus der Sammelgrube, muß die Gülle homogenisiert werden. Hierzu werden Rührwerke eingesetzt, die sich durch die Längsschlitze der Spaltenböden in die darunter befindliche Gülle einbringen lassen.

In dem deutschen Gebrauchsmuster DE 93 00 514 U1 wird ein Gerät zum Zerkleinern von festen Bestandteilen in Gülle offenbart, das im Ruhezustand zum Einstecken in Schlitze von Spaltenböden in ein plattenartiges Einsteckteil verstellbar ist. Das Rührwerk des Geräts umfaßt Rührflügel, die um Achsen begrenzt schwenkbar gelagert sind. Während einer Drehbewegung des Rührwerks in der eingetauchten Gülle werden die Rührflügel ausgelenkt und gelangen in eine zur Antriebswellenachse winklige Lage, in der sie während der Drehbewegung des Rührwerks wie ein Propeller wirken. Bei einer Ausführungsform besteht das Rührwerk aus einer Rührwelle, an welchem Rührflügel schwenkbar angeordnet sind, wobei ein Basisteil, auf welchem ein Antriebsmotor sitzt, zwei Längsholme, die am Basisteil befestigt sind und eine Quertraverse unterhalb der Rührflügel einen Rahmen bilden, der die Rührwelle mit Rührflügel umgibt. Diese ganze Anordnung kann als plattenartiges Einsteckteil durch Schlitze von Spaltenböden abgelassen werden, in die sich aufgrund der Schlitzlänge eine Ausführungsform gemäß Figur 5 in der deutschen Gebrauchsmusterschrift DE 93 00 514 U1 nicht einschwenken läßt.

In der Schweizer Patentschrift CH-644 279 A wird ein Jaucherührgerät offenbart, das zum Einführen in eine nicht schlitzförmige Öffnung ausgestaltet ist. Die Rühreinrichtung ist so konzipiert, daß sie zumindest eine Öffnung benötigt, die dem Durchmesser des Rührpropellers entspricht. Dementsprechend ist dieses Jaucherührgerät für schlitzförmige Öffnungen von Spaltenböden in Ställen für Rinder und/oder Schweine nicht geeignet.

### Aufgabe und Vorteile der Erfindung

Die Erfindung hat die Aufgabe, eine Vorrichtung zum Homogenisieren von Gülle für schlitzförmige Öffnungen von Spaltenböden in Ställen für Rinder und/oder Schweine bereit zu stellen, mit der an einem Einsatzort, insbesondere bei kleinen Schlitzlängen, ein vergleichsweise größerer Bereich von Gülle sich schneller und einfacher homogenisieren läßt.

Diese Aufgabe wird durch die Merkmale des Anspruchs 1 gelöst.

In den Unteransprüchen sind vorteilhafte und zweckmäßige Weiterbildungen der erfindungsgemäßen Vorrichtung angegeben.

Die Erfindung geht von einer Vorrichtung zum Homogenisieren von Gülle mit einem Führungsrahmen aus, an dem ein Motor und eine Rühreinrichtung über ein Basisteil höhenverstellbar angebracht sind, wobei die Rühreinrichtung eine mit dem Motor verbundene Antriebswelle und Rührflügel am Ende der Antriebswelle umfaßt, und wobei die Rühreinrichtung derart ausgebildet ist, daß sie als schwertförmige Anordnung in schlitzförmige Öffnungen von Spaltenböden in Ställen für Rinder und/oder Schweine, bei welchen die Schlitzlänge die Schlitzbreite deutlich übersteigt, einführbar ist. Der Kern der Erfindung liegt nun darin, daß eine Antriebswellenführung vorgesehen ist, die bei einer Höhenverstellung sich mit der Rühreinrichtung mitbewegt und wenigstens eine am Basisteil und/oder Motor befestigte Stütze mit wenigstens einer Lagereinheit für die Antriebswelle umfaßt, welche Lagereinheit und Stütze in die schlitzförmigen Öffnungen einführbar sind und daß die Lagereinheit vom Motor in Richtung Rührflügel betrachtet vor den Rührflügeln liegt, so daß die Rührflügel ohne zusätzliche Umrahmung angeordnet sind. Durch diese Vorgehensweise kann der Motor mit Rühreinrichtung senkrecht in einen Spaltenschlitz abgelassen werden. Da anders wie im Stand der Technik die Rührflügel nicht in einer zusätzlichen Umrahmung gelagert sind, können die Rührflügel in vorteilhafter Weise so breit ausgelegt werden, wie die Länge der Spaltenschlitze des Spaltenbodens. D.h. die "fliegenden" Rührflügel haben den Vorteil, daß ihre Dimensionierung nur durch äußere Gegebenheiten (z.B. die Schlitzlänge der Spaltenböden) beschränkt wird und das Strömungsverhalten wesentlich besser ist als bei einem umrahmten Rührflügel, bei dem der Rahmen strömungsstörend wirkt.

In einer besonders bevorzugten Ausgestaltung der Erfindung ist die Stütze nicht über die Rührflügel hinaus geführt und umschließt die Antriebswelle nicht, wobei die Stütze mit der Antriebswelle in einer Ebene liegt. Durch diese Maßnahme entsteht eine besonders flache "schwertförmige" Rühreinrichtung mit "fliegenden" Rührflügeln. Denn die "Schwertstärke" wird lediglich vom Durchmesser der Antriebswelle bestimmt, da es im allgemeinen ausreichend ist, die parallele Stütze nicht breiter als den Antriebswellendurchmesser auszuführen. Das hat den Vorteil, daß das Rührwerk auch bei sehr schmalen Spaltenschlitzen eines Spaltenbodens, die nicht größer als 20 mm sind, noch zum Einsatz kommen kann. Bei herkömmlichen Spaltenschlitzen mit z. B. 28 mm Spaltenbreite erlaubt der dadurch entstehende zusätzliche Freiraum zu den Holmen des Spaltenbodens, daß die Rühreinrichtung besonders weit quer zur Längsrichtung der Spaltenschlitze bzw. -holme geneigt werden kann.

In einer besonders bevorzugten Ausführungsform der Erfindung ist eine Lagereinheit für die Antriebswelle am Ende der wenigstens einen Stütze vorgesehen. Dabei ist es günstig, wenn diese Stütze bis in den Bereich der Rührflügelaufnahme geführt ist. Auf diese Weise läßt sich eine ausreichende Stabilisierung der Antriebswelle realisieren. Für eine weitere Stabilitätsverbesserung und eine zusätzliche Abschirmung der Antriebswelle ist es ebenfalls bevorzugt, zwei Stützen bis zur Lagereinheit zu führen. Ggf. kann die Antriebswelle auch in einem Schutzrohr gelagert werden. Dies schirmt ebenfalls die Welle ab und verhindert das unerwünschte Aufwickeln von Stroh- und Futterresten.

Des weiteren ist es vorteilhaft, wenn die Lagereinheit am Ende der Antriebswelle an eine Aufnahmeeinheit für die Rührflügel angrenzt und die aneinanderliegenden Flächen von Lagereinheit und Aufnahmeeinheit in Richtung der Achse der Antriebswelle betrachtet eine mehreckige Außenkontur, insbesondere eine dreieckige oder viereckige Außenkontur aufweisen. Hierdurch werden sich aufwickelnde Stroh- oder Futterreste, die gegebenenfalls den Homogenisiervorgang oder das Herausziehen der Rühreinrichtung aus einer schlitzförmigen Öffnung hindern können, abgeschert.

In einer überdies besonders bevorzugten Ausgestaltung der Erfindung sind Mittel zum Schwenken wenigstens der Rühreinrichtung quer zur Längsrichtung der schlitzförmigen Öffnung im eingeführten Zustand vorgesehen. Durch diese Maßnahme kann auf beiden Seiten einer Spalte eines Spaltenbodens bei eingeführter Vorrichtung gerührt werden, wodurch sich ein größeres Güllevolumen in einer darunter liegenden Sammelgrube (z.B. in Längsrichtung eines Sammelkanals) homogenisieren läßt. Das hat zur Folge, daß die erfindungsgemäße Vorrichtung für die Homogenisierung einer bestimmten Grubengröße, insbesondere Kanallänge, weniger oft umgesetzt werden muß.

Zur Erzielung einer einfachen und billigen Konstruktion ist es darüber hinaus vorteilhaft, wenn die Rühreinrichtung zusammen mit dem Motor schwenkbar ist.

In einer besonders bevorzugten Ausführungsform der Erfindung sind die Rührflügel auf Achsen gelagert und aus einer flachen Stellung begrenzt schwenkbar sowie mit Mittel zum schnellen Austausch der Rührflügel versehen. Durch diese Maßnahme läßt sich die Rühreinrichtung an eine beispielsweise geänderte Viskosität der Gülle anpassen, womit eine sonst überhöhte Stromaufnahme des Motors vermieden wird. Ein schneller Austausch kann auch dann notwendig sein, wenn eine andere Motorgröße eingesetzt werden soll, die eine entsprechende Größe von Rührflügeln erfordert oder wenn die Rührflügel im Einsatz beschädigt worden sind.

In einer weiteren bevorzugten Ausführungsform der Erfindung ist der Grad der Ausschwenkung der Rührflügel in den zwei möglichen Drehrichtungen der Antriebswelle unterschiedlich groß. Durch diese Maßnahme kann bei entsprechender Güllekonsistenz die Drehrichtung kurzfristig geändert werden, um den Rührwiderstand der Flügel und damit die Stromaufnahme des Motors entsprechend beeinflussen zu können.

Um eine große Rührwirkung zu erzielen, ist es außerdem vorteilhaft wenn die Außenkontur der Rührflügel im aufgeklappten Zustand wenigstens abschnittsweise im Wesentlichen die Form eines Kreises aufweist, dessen Mittelpunkt auf der Antriebswellenachse liegt. Dies ist insbesondere dann bevorzugt, wenn die Rührflügel im ausgeklappten Zustand eine im wesentlichen senkrechte Stellung zur Drehachse einnehmen.

Um die Rührwirkung beim Homogenisieren zu verbessern ist es von Vorteil, wenn die in Strömungsrichtung liegenden Außenkonturbereiche der Rührflügel im aufgeklapptem Zustand eine Aufkantung wenigstens zu einer Seitenfläche eines Flügels aufweisen. Eine weitere Verbesserung tritt ein, wenn die Aufkantung an beiden Seitenflächen eines Rührflügels angebracht wird, womit ein T-förmiger Querschnitt von Rührflügel und Aufkantung entsteht.

In einer erfindungsgemäßen Ausführungsform mit einem Führungsrahmen für den Motor und die Rühreinrichtung ist es weiterhin bevorzugt, wenn der Führungsrahmen mit einer Rundrohrführung ausgestattet ist. Eine derartige Führungskonstruktion ist kostengünstig und weist eine vergleichsweise hohe Stabilität und große Sicherheit vor Verkantungen auf. Außerdem lassen sich in einfacher Weise Begrenzungen nach oben und nach unten anbringen. Durch eine Begrenzung nach unten kann verhindert werden, daß die Rührflügel im Arbeitseinsatz beispielsweise am Sammelgrubenboden (Kanalboden) anstoßen und beschädigt werden. Darüber hinaus läßt sich eine zuvor als günstig erwiesene Arbeitstiefe beispielsweise an einem neuen Einsatzort sofort wieder einstellen. Durch eine Begrenzung nach oben kann vermieden werden, daß sich die Rühreinrichtung durch die Schubkraft der Rührflügel nach oben schiebt. Außerdem treten störende Vibrationen mit einer entsprechenden Lärmbelästigung insbesondere dann nicht auf, wenn die Rühreinrichtung zwischen der oberen und unteren Begrenzung festgelegt ist. Dies führt letztendlich zu einem herabgesetzten Materialverschleiß.

Um bei einer erfindungsgemäßen Ausführungsform mit Führungsrahmen beim Herausziehen der Rühreinrichtung keine Sicherheitsrisiken (die Vorrichtung könnte umstürzen) einzugehen, ist es außerdem besonders vorteilhaft, wenn bei einer Kippung der Anordnung Motor, Rühreinrichtung und Führungsrahmen quer zu den Spaltenholmen bzw. -schlitzen im eingeführten Zustand vor oder beim Herausziehen der Rühreinrichtung aus einem Spaltenschlitz die Vorrichtung so ausgelegt ist, daß die Anordnung automatisch in eine senkrechte Position bringbar und in dieser arretierbar ist.

Zum effektiven Homogenisieren eines großen Bereichs von Gülle ist es überdies bevorzugt, daß Mittel zum Kippen der Rühreinrichtung in Längsrichtung der schlitzförmigen Öffnungen vorgesehen sind. Dabei ist es vorteilhaft, wenn die Mittel eine Aufständerung auf einer Seite und/oder in der Mitte im unteren Bereich am Führungsrahmen umfassen.

Hierdurch läßt sich die komplette Vorrichtung in die gewünschte Position verkippen, oder sofern die Aufständerung in der Mitte angebracht ist, in der Art einer Schaukel hin und her bewegen. Beispielsweise umfaßt die Aufständerung ein am Führungsrahmen angebrachtes Rollenpaar in mittiger Position, das sich in einfacher Weise absenken läßt. In gleicher Weise ist es bevorzugt, wenn die Mittel zum Kippen eine Kippeinheit am Basisteil, an dem Motor und Rühreinrichtung befestigt sind, umfassen. Die Möglichkeit der Verkippung in Längsrichtung der schlitzförmigen Öffnungen ist insbesondere dann vorteilhaft, wenn eine erfindungsgemäße Rühreinrichtung zum Einsatz kommt, bei der z. B. die Rührflügel so breit sind, daß sie sich gerade noch durch Spaltenschlitze eines Spaltenbodens für Schweine einführen lassen, jedoch die Antriebswelle mit parallel geführter, stützenförmiger Antriebswellenlagerung wesentlich schmaler als die Rührflügelbreite bzw. die Schlitzlänge der Spaltenschlitze ist. Hierdurch verbleibt bei eingeführter Rühreinrichtung genügend Raum, um eine ausreichende Kippbewegung in den Spaltenschlitzen ausführen zu können.

Besonders vorteilhaft ist die Weiterbildung der Erfindung dahingehend, daß im unteren Endbereich des Führungsrahmens wenigstens zwei Transportrollen vorgesehen sind. Hierdurch läßt sich der Güllemixer z. B. zu einem anderen Einsatzort verfahren. Vorzugsweise sind wenigstens zwei Transportrollen an einem Stellrahmen angeordnet, der am Führungsrahmen befestigt ist.

Um insbesondere beim Transport die Standfestigkeit des Schweinegüllemixers zu erhöhen, wird im weiteren vorgeschlagen, daß wenigstens zwei Transportrollen, vorzugsweise vier Transportrollen, an einem separaten Gestell angeordnet sind, welches mit dem Stellrahmen lösbar verbunden ist. In diesem Zusammenhang ist es außerdem bevorzugt, wenn das separate Gestell derart ausgestaltet ist, daß es sich in Bezug auf den Stellrahmen um eine Drehachse kippen läßt. Hierdurch kann die Manövrierfähigkeit von Güllemixer und Transportgestell erhöht werden. Um jedoch bei dieser Ausführungsform auch einen sicheren Stand während des Betriebes zu gewährleisten, ist es darüber hinaus von Vorteil, wenn eine Einrichtung vorhanden ist, mit welcher sich die Verkippung blockieren läßt.

Um das Transportgestell möglichst flexibel zu gestalten und einen möglichst großen Standbereich zu realisieren, wird überdies vorgeschlagen, daß die Transportrollen an ausklappbaren und/oder ausschwenkbaren und/oder ausziehbaren Lagerarmen angeordnet sind, die in der jeweils ausgeklappten, ausgeschwenkten oder ausgezogenen Stellung arretierbar sind. In diesem Zusammenhang ist es von Vorteil, wenn die Transportrollen und/oder die Lagerarme lösbar mit dem Transportgestell und/oder Stellrahmen verbunden sind, z. B. über ein Stecksystem mit Bolzen und/oder Schraubenhalterung.

Besonders vorteilhaft ist es, wenn Lagerarme für vier Transportrollen vorgesehen sind, die sich derart in einer Ebene parallel zur Standfläche schwenken lassen, daß jeweils zwei Transportrollen mittels der Lagerarme aneinander geschoben werden können. Auf diese Weise wird es möglich den Schweinegüllemixer zu Kippen, wobei die aneinander geschobenen Transportrollen als Drehpunkt dienen.

Um eine effektive Handhabung der erfindungsgemäßen Vorrichtung sicher zu stellen, sind Mittel vorgesehen, über die die Rührflügel in Längsrichtung der schlitzförmigen Öffnung beim Einführen und/oder Ausschwenken ausgerichtet werden können.

Darüber hinaus ist es, um Beschädigungen an den Rührflügeln zu verhindern, von Vorteil, wenn die Antriebswelle am rührflügelseitigen Ende über die Rührflügel vorsteht.

Außerdem ist es bevorzugt, eine zusätzliche Transporteinrichtung vorzusehen, die vorzugsweise an der Radachse des Schweinegüllemixers einklinkbar ist und selbst ein weiteres Räderpaar umfaßt sowie eine Lagereinheit. Der Schweinegüllemixer wird mit eingeklinkter Transporteinrichtung gekippt und auf der Lagereinheit in gekipptem Zustand abgelegt. In dieser Position läßt er sich dann einfach und stabil verfahren.

Um die Möglichkeit zu schaffen, daß in einfacher Weise verschiedene Stützen und Antriebswellen mit unterschiedlicher Länge bzw. Breite - für unterschiedliche schlitzförmige Öffnungen bzw. verschiedene Grubentiefen - eingesetzt werden können, wird im weiteren vorgeschlagen, daß die wenigstens eine am Basisteil und/oder Motor befestigte Stütze und die mit dem Motor verbundene Antriebswelle derart ausgestaltet sind, daß sie austauschbar sind.

In einer weiteren vorteilhaften Ausführungsform der Erfindung umfaßt die wenigstens eine am Basisteil und/oder Motor befestigte Stütze einen Fluidanschluß, für vorzugsweise Wasser und wenigstens eine Fluidaustrittsöffnung, wobei der Fluidanschluß und die Fluidaustrittsöffnung innerhalb der Stütze miteinander in Verbindung stehen. Durch diese Maßnahme wird erreicht, daß die oft im oberen Bereich torfartig getrocknete Gülle durch Beimengen eines Fluids, vorzugsweise Wasser, eine rührfähige Konsistenz erhält, die sich mit der darunter befindlichen flüssigen Gülle leicht homogenisieren läßt. In diesem Zusammenhang ist es außerdem bevorzugt, wenn die wenigstens eine Fluidaustrittsöffnung im Bereich der Lagereinheit der Antriebswelle angeordnet ist. Auf diese Weise findet ständig eine Lagerkühlung statt, was den Verschleiß der vornehmlich eingesetzten Gleitlager deutlich herabsetzt.

Um in einfacher Weise eine Vielzahl von Fluidaustrittsöffnungen anbringen zu können, ist es schließlich bevorzugt, wenn die wenigstens eine am Basisteil und/oder Motor befestigte Stütze im wesentlichen aus einem Hohlprofil hergestellt ist.

### Zeichnungen:

Mehrere Ausführungsbeispiele der Erfindung sind in den Zeichnungen dargestellt und in der nachfolgenden Beschreibung unter Angabe weiterer Vorteile und Einzelheiten näher erläutert. Es zeigen
- Fig. 5 a-c: erfindungsgemäße schwenkbare Rührflügel im eingeklappten Zustand in der Vorder- und Seitenansicht sowie in ausgeklappten Zustand in der Draufsicht von unten,
- Fig. 6: ein zweites erfindungsgemäßes, schematisch dargestelltes Ausführungsbeispiel für den Einsatz bei Spaltenböden von Scheinställen in der Seitenansicht,
- Fig. 7: das Ausführungsbeispiel aus Fig. 6 in der Vorderansicht und geschnittenem Spaltenboden,
- Fig. 8a: ein Ausführungsbeispiel gemäß Fig. 6 und 7 im Transportzustand mit zusätzlichem Stützrad,

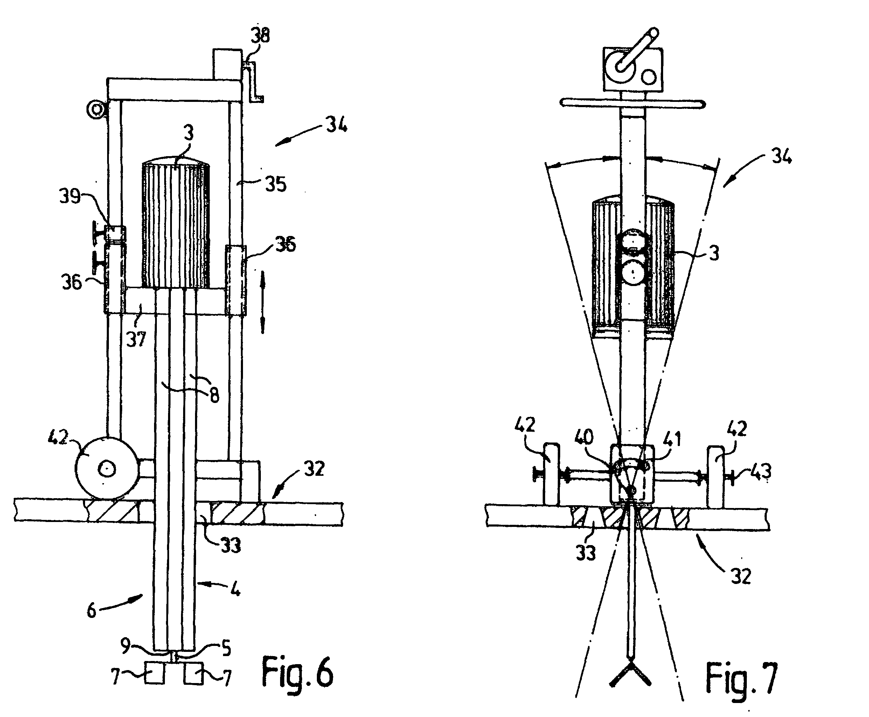

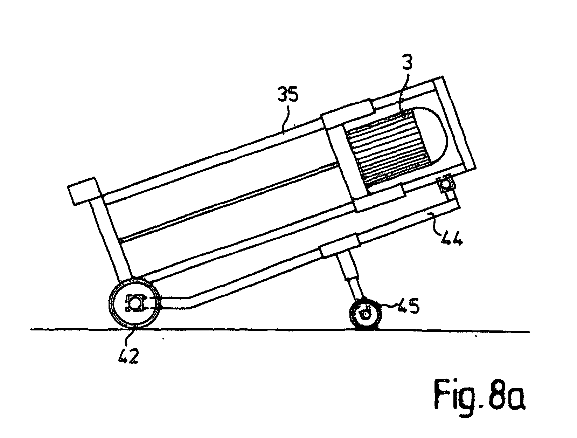

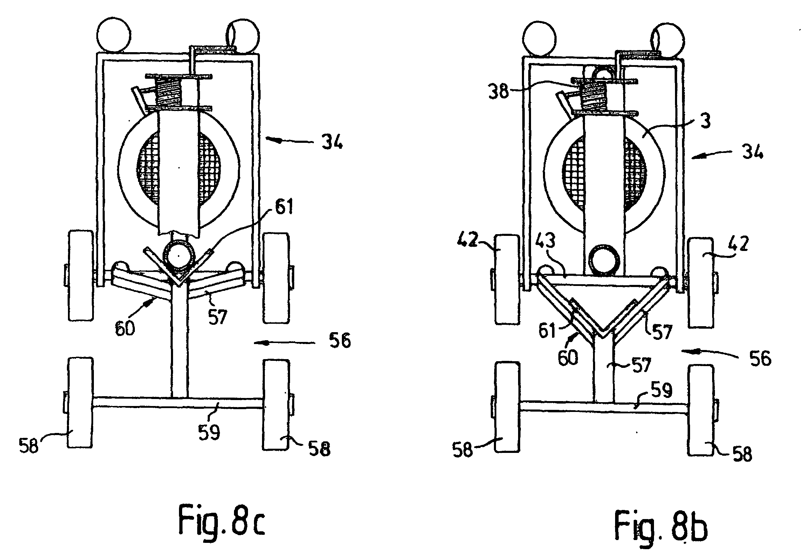

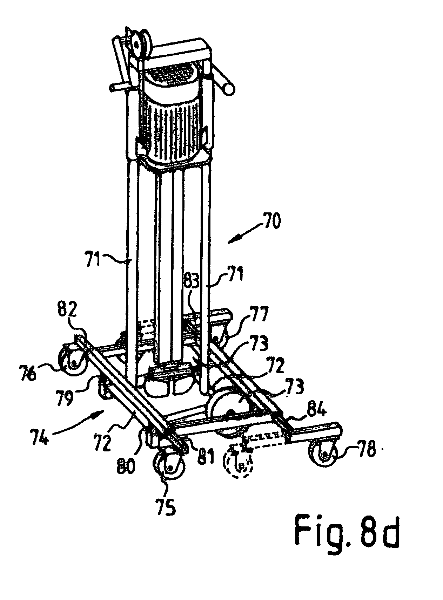

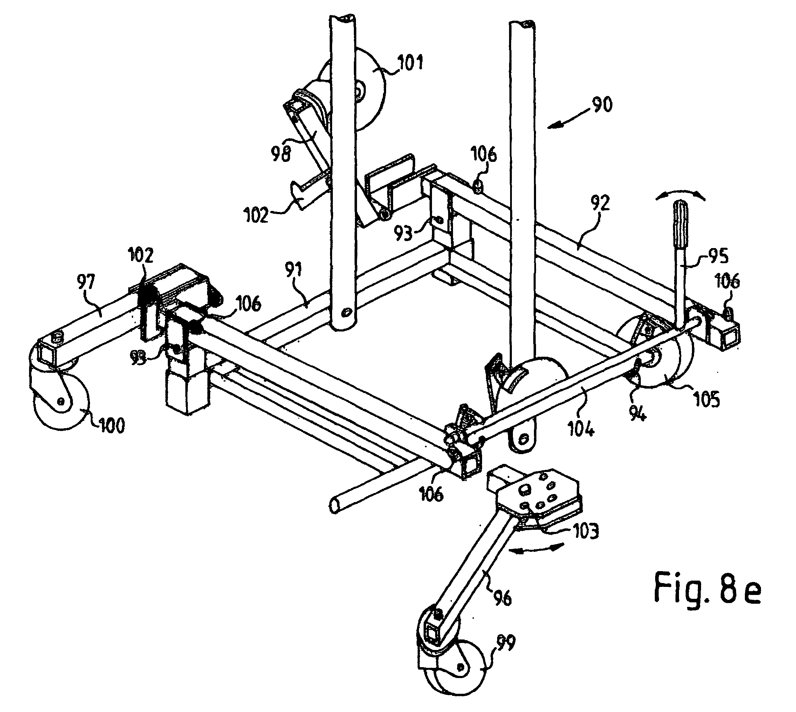

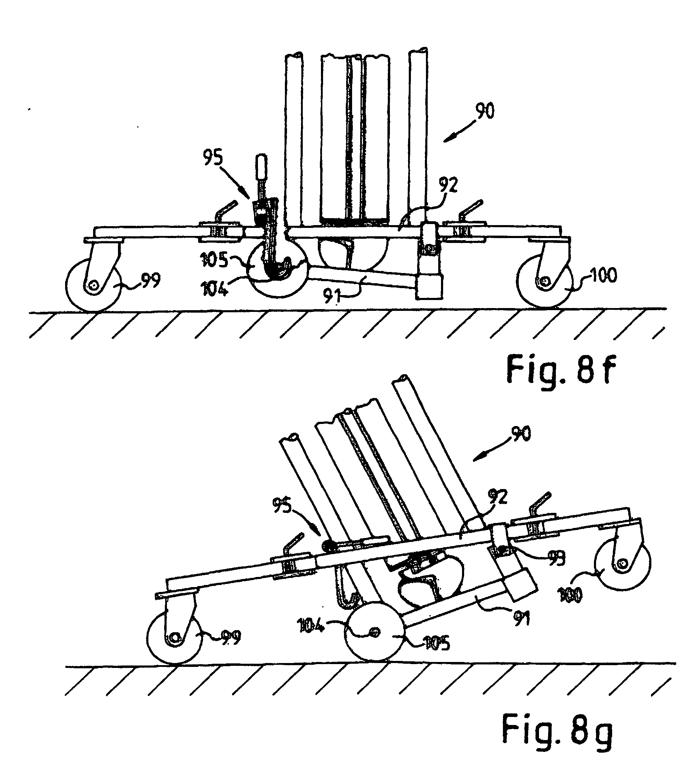

- Fig. 8 b und c: ein Ausführungsbeispiel gemäß Fig. 6 und 7 mit einer zusätzlichen Transportvorrichtung in senkrechter Position und gekipptem Transportzustand,
- Fig. 8d: eine erfindungsgemäße Vorrichtung zum Homogenisieren von Gülle für Spaltenböden von Schweineställen mit einem zusätzlichen Vierrollenfahrwerk in einer perspektivischen Ansicht,
- Fig. 8e: ein weiteres Ausführungsbeispiel eines Vierrollenfahrwerks mit angedeutetem Schweinegüllemixer in einer Perspektivansicht,
- Fig. 8f und 8g: das Vierrollenfahrwerk aus Figur 8e in der Seitenansicht mit ausgeklappten Transportrollen in zwei unterschiedlichen Transportstellungen,

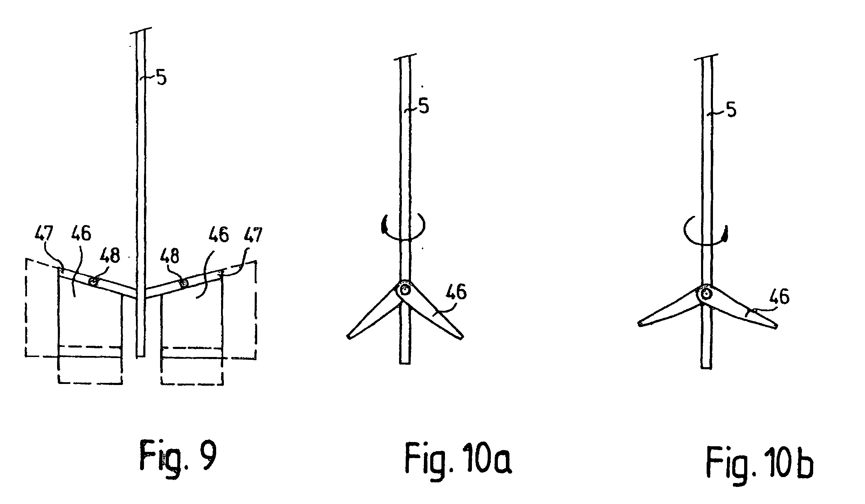

- Fig. 9: erfindungsgemäße schwenkbare und austauschbare Rührflügel,
- Fig. 10 a und b: das Ausführungsbeispiel aus Fig. 9 in ausgeschwenktem Zustand mit unterschiedlichem Grad der Ausschenkung für die beiden Drehrichtungen der Antriebswelle,

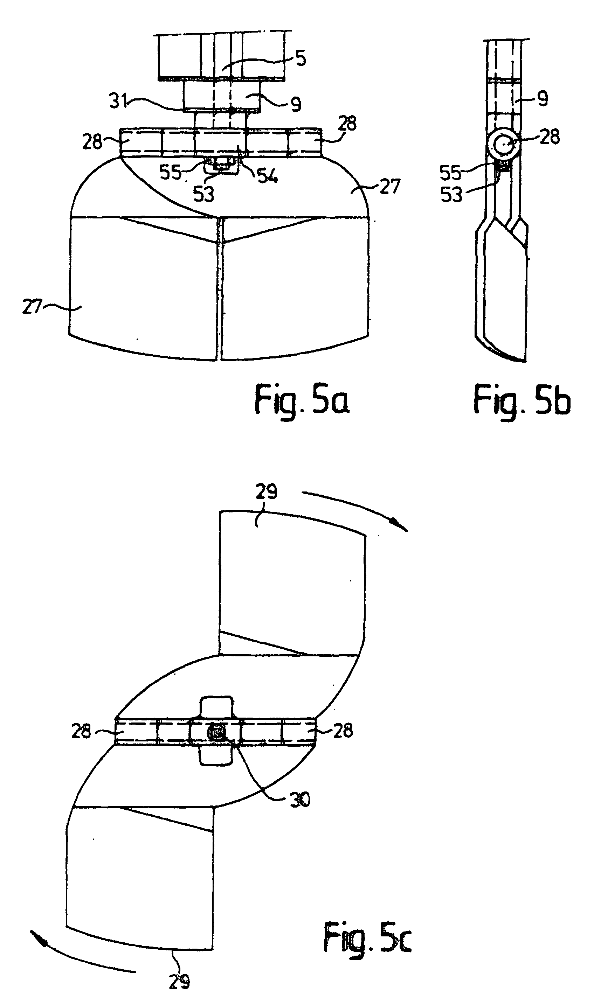

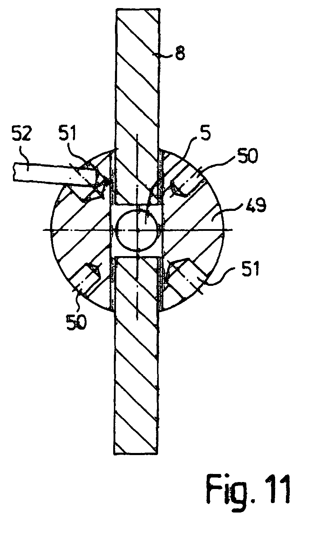

- Fig. 11: eine erfindungsgemäße Muffe zur einfachen Positionierung der Rührflügel vor dem Ausschwenken der Rühreinrichtung für insbesondere ein Ausführungsbeispiel nach Fig. 1 und 2 und

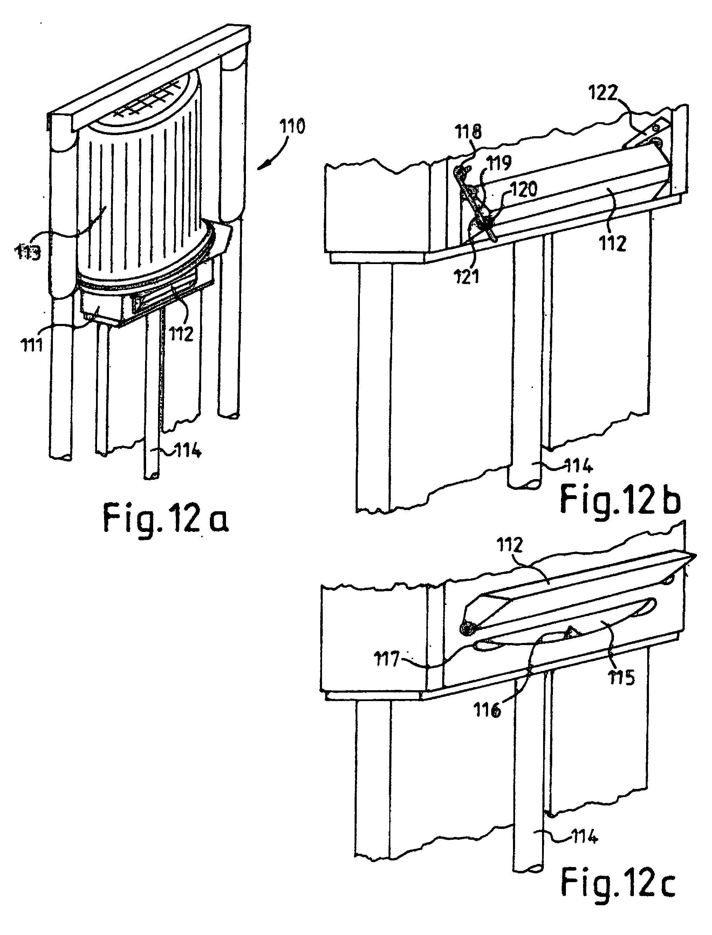

- Fig. 12 a bis c: einen ausschnittsweise dargestellten Schweinegüllemixer mit einer weiteren Vorrichtung zur einfachen Positionierung der Rührflügel vor dem Ausschwenken der Rühreinrichtung aus einer Spaltenschlitz in perspektivischer Ansicht.

### Beschreibung der Ausführungsbeispiele

Ein erstes Ausführungsbeispiel der Erfindung ist in den Fig. 6 und 7 dargestellt. Diese Vorrichtung zum Homogenisieren von Gülle wird vorwiegend für Spaltenböden 32 in Ställen für Schweine eingesetzt. Diese sind im Vergleich zu Spaltenböden für Rinder mit wesentlich kürzeren Spaltenschlitzen versehen, so daß ein Einschwenken einer Rühreinrichtung 4 kaum möglich ist. Darüber hinaus sind die Spaltenschlitze 33 in Ställen für Schweine im Vergleich zu Spaltenböden für Rinder noch schmaler. Aus diesem Grund weist diese erfindungsgemäße Vorrichtung 34 im folgenden Schweinegüllenmixer genannt einen Führungsrahmen 35 zum vorzugsweise senkrechten Herunterlassen eines Motors 3 und der Rühreinrichtung 4 auf. Die Rühreinrichtung 4 beinhaltet im wesentlichen eine mit dem Motor verbundene Antriebswelle 5, eine Antriebswellenführung 6 sowie Rührflügel 7 (in Fig. 7 im aufgeklappten Zustand dargestellt). Die Antriebswellenführung 6 weist im wesentlichen zwei am Motor befestigte Stützen 8 und an deren vorderem Ende eine Lagereinheit 9 (vgl. Fig. 5a) auf. Im Führungsrahmen 35 gleiten zwei Führungsrohre 36, die durch ein Basisteil 37 verbunden sind, auf welchem der Motor 3 und die Rühreinrichtung 4 sitzen. An geeigneter Stelle kann die Rühreinrichtung 4 über eine Kurbeleinrichtung 38 durch einen Spaltenschlitz 33 in die Gülle abgelassen werden. Bei einem Schweinegüllemixer 34 mit erfindungsgemäßer Rühreinrichtung 4 können die Rührflügel in vorteilhafter Weise so breit ausgelegt werden, wie die Länge der Spaltenschlitze des Spaltenbodens (beispielsweise beträgt die Länge der Spaltenschlitze 25 cm). Dies ist möglich, da anders wie im Stand der Technik die Rührflügel nicht in einer zusätzlichen Umrahmung gelagert sind, die selbstverständlich auf Kosten der Rührflügelbreite geht. Um zu verhindern, daß die Schubkraft des Propellers bei anlaufendem Motor die Rühreinrichtung wieder nach oben treibt, kann ein Anschlag 39, der leicht verstellbar ist, am Führungsrahmen 35 angeordnet werden. Gegebenenfalls kann auch unterhalb eines Führungsrohrs 36 ein weiterer Anschlag zur Begrenzung der Eindringtiefe der Rühreinrichtung vorgesehen werden.

In Fig. 5 a bis c ist ein erfindungsgemäßes Rührflügelpaar 27 in der Vorderansicht (Fig. 5a), in der Seitenansicht (Fig. 5b) und in der Draufsicht von unten (Fig. 5c) dargestellt. Die Rührflügel 7 sind auf einer Achse 28 gelagert und aus der flachen Stellung begrenzt ausschwenkbar. Die Achse 28 ist mit einer Stellschraube 53 (siehe Fig. 5a und 5b) in einer an der Aufnahmeeinheit 31 angeschweißten Hülse 54 befestigt. Hierzu weist die Hülse 54 ein Gewinde auf. Um die in das Gewinde eingeschraubte Stellschraube zu sichern, kann eine Kontermutter 55 vorgesehen werden. Diese Konstruktion hat den enormen Vorteil, daß zum Wechseln der Rührflügel 7 lediglich die Stellschraube 53 mit Kontermutter 55 gelöst werden muß, um die Achse 28 herausschieben zu können. Eine Demontage der Antriebswelle oder dergleichen ist nicht erforderlich.

Der Teil 29 der Außenkontur hat die Form eines Kreises, dessen Mittelpunkt auf der Drehachse 30 liegt. Auf diese Weise kann eine besonders effektive Rührwirkung erzielt werden. Eine weitere Besonderheit soll an Figur 5a und b erläutert werden. Die Lagereinheit 9 am Ende der Antriebswelle 5 grenzt an eine Aufnahmeeinheit 31 für die Rührflügel 27 an, wobei die aneinanderliegenden Flächen von Lagereinheit 9 und Aufnahmeeinheit 31 in Richtung der Antriebswelle 30 betrachtet, eine rechteckige Außenkontur besitzen. Durch eine solche Maßnahme werden zum Aufwickeln geeignete Stroh- oder Futterbestandteile abgeschert.

Um einen besonders großen Bereich der Gülle homogenisieren zu können, kann auch der Schweinegüllemixer 34 erfindungsgemäß quer zur Längsrichtung der Spalten 33 gekippt werden (siehe Fig. 7). Die Kippung der gesamten Anordnung (Motor, Rühreinrichtung und Führungsrahmen 35) erfolgt um die Achse 40, wobei der gewünschte Kippwinkel durch Arretierungsmittel 41 festgelegt wird. Zum leichteren Transport des Schweinegüllemixers 34 mit hochgefahrener Rühreinrichtung 4 ist ein Räderpaar 42 auf einer Radachse 43 vorhanden.

Zur weiteren Verbesserung des Transports kann, wie in Fig. 8a dargestellt, an einer Stütze 44 ein zusätzliches Stützradpaar 45 vorgesehen werden. Damit läßt sich die komplette Anordnung im gekippten Zustand besonders einfach verfahren (vgl. Fig. 8).

In einer alternativen Ausführungsform zu Fig. 8a kann zum verbesserten Transport des Schweinegüllemixers 34 eine zusätzliche Transporteinrichtung 56 vorgesehen werden (vgl. Fig. 8b und c). Die zusätzliche Transporteinrichtung 56 umfaßt eine gabelförmige Einklinkeinheit 57 mit einem daran angebrachten Räderpaar 58 auf einer Achse 59 sowie eine Stütze 60 mit einem am oberen Ende der Stütze angebrachten V-förmigen Lager 61.

Für den Transport des Schweinegüllemixers 34, der in den Fig. 8b und 8c in der Draufsicht von oben dargestellt ist, wird die gabelförmige Einklinkeinheit 57 der Transporteinrichtung 56 auf die Radachse 43 des Spaltenmixers 34 gefahren, und anschließend der komplette Spaltenmixer 34 über das Räderpaar 42 in Richtung Transporteinrichtung gekippt und mit einem Holm des Führungsrahmen 35 im V-förmigen Lager 61 abgelegt. Vorzugsweise wird durch den Kippvorgang die Aufnahmestelle der Einklinkeinheit 57 verriegelt, so daß die Radachse 43 des Schweinegüllemixers daran festgelegt ist. In diesem Zustand (gem. Fig. 8c) kann der Schweinegüllemixer 34 in einfacher Weise zusammen mit der zusätzlichen Transporteinrichtung 56 verfahren werden.

In Fig. 8d ist ein Schweinegüllemixer 70 dargestellt, der im unteren Bereich eines Führungsrahmens 71 einen Stellrahmen 72 mit seitlich angeordneten Rädern 73 umfaßt. Um diesen Schweinegüllemixer 70 besonders einfach und sicher transportieren zu können, ist ein separates Gestell 74 mit vier Transportrollen 75 bis 78 vorgesehen. Am Gestell 74 sind Zapfenelemente 79, 80 vorhanden, die in entsprechende Aufnahmen am Stellrahmen 72 passen, so daß das Transportgestell 74 mit zusätzlichen Arretiermitteln (nicht gezeigt) lösbar mit dem Stellrahmen 72 verbunden werden kann. Die Transportrollen 75 bis 78 sind an Lagerarmen 81 bis 84 angeordnet, die ausziehbar im Gestell 74 geführt sind. Die Lagerarme 83 und 84 lassen sich zusätzlich in einem Bereich von 180 ° schwenken. Die um 180 ° geschwenkte Position ist in Figur 8d gestrichelt eingezeichnet. Auf diese Weise läßt sich das Gestell 74 mit Transportrollen 75, 78, sofern der Schweinegüllemixer nicht transportiert wird, klein und kompakt zusammenschieben, gegebenenfalls auch vom Stellrahmen 72 komplett abnehmen. Zum Transport des Schweinegüllemixers können jedoch die Lagerarme umgeschwenkt (Lagerarm 83 und 84) und ausgezogen werden, so daß die Transportrollen 75 bis 78 eine besonders große Standfläche einnehmen. Hierdurch wird eine hohe Kippsicherheit beim Transportieren des Schweinegüllemixers 70 gewährleistet.

Ein weiterer Schweinegüllemixer 90 mit Stellrahmen 91 und daran angebrachten Transportgestell 92 ist in Fig. 8e abgebildet. Bei dieser Ausführungsform ist das Transportgestell 92 in Bezug auf den Stellrahmen 91 über die Schwenkachsen 93 verkippbar. Die Verkippung läßt sich durch ein am Transportgestell 92 angeordnetes Hakenelement 94, das in den Stellrahmen 91 eingreift und über einen Hebelmechanismus 95 betätigbar ist, blockieren. Am Transportgestell 92 sind über Lagerarme 96 - 98 vier Transportrollen 99 bis 101 angeordnet (die vierte Transportrolle ist in Fig. 8e nicht abgebildet). Zwei Transportrollen 97, 98 lassen sich aus einem hochgeklappten Zustand ausklappen und mit einem Haken 102 arretieren. Hingegen werden die beiden Rollen 99 an den Armen 96 nach außen geschwenkt und z. B. über Bolzen 103 festgelegt. Der ausgeklappte bzw. ausgeschwenkte Zustand der Transportrollen 99 bis 101 ist vorzugsweise der Transportzustand.

Zwei mögliche Transportstellungen sind in den Fig. 8f und 8g dargestellt. Dabei ist einmal das Hakenelement 95 an der Achse 104 von Rädern 105 am Stellrahmen 91 eingehakt, so daß der Schweinegüllemixer 90 senkrecht zum Transportgestell 92 bewegt wird (siehe Fig. 8f). Im anderen Fall (Fig. 8g) wird der komplette Schweinegüllemixer 90 beim Transportieren bei ausgehaktem Hakenelement 95 gekippt, was die Handhabbarkeit der gesamten Anordnung, d. h. die Manövrierbarkeit beim Transportieren vereinfachen kann.

Die Lagerarme 96 bis 98 lassen sich, wie in Figur 8e beispielhaft am Lagerarm 96 gezeigt, vom Transportgestell 92 aufgrund einer Steckverbindung in einfacher Weise abnehmen. Zur Sicherung der Lagerarme 96 bis 98 weist die Steckverbindung jeweils Arretierungsmittel 106 (z. B. Schrauben) auf.

In Fig. 9 ist eine Antriebswelle 5 mit erfindungsgemäßem Rührflügel 46 auf Achsen 47 dargestellt, die sich in besonders einfacher Weise austauschen lassen. Hierzu sind lediglich die Schraubenmittel 48 zu lösen und die Rührflügel gegen gewünschte andere Rührflügel auszutauschen. Andere Rührflügelformen sind in Fig. 9 durch die gestrichelten Linien angedeutet. Sie kommen dann in Betracht, wenn sich z. B. die Güllekonsistenz ändert und dennoch die Belastung des Motors in einem gleichbleibenden Bereich liegen soll. Um einen weiteren Parameter im Hinblick auf die Motorbelastung bzw. die Rührwirkung zur Verfügung zu haben, können die auswechselbaren Rührflügel 46 so ausgelegt sein, daß sie je nach Drehrichtung unterschiedlich stark ausschwenken (vgl. hierzu Fig. 10 a und b).

Die Antriebswelle 5 in den Fig. 9 bzw. 10 a und b steht über die Rührflügel in zusammengeklapptem Zustand über. Auf diese Weise wird verhindert, daß die Rührflügel beschädigt werden, sofern die Rühreinrichtung auf dem Boden einer Sammelgrube (Güllekanal) aufsitzen sollte.

In Fig. 11 ist eine Muffe 49 teilweise geschnitten dargestellt. Diese dient dazu, die Rührflügel eines Schweinegüllemixers 34 vor dem Herausziehen aus den Spaltenschlitzen 33 eines Spaltenbodens 32 in eine zu den Spalten 33 parallele Position zu bringen. Die Muffe 49 ist beispielsweise im Bereich unterhalb des Motors 3 des des Schweinegüllemixers 34 auf der Antriebswelle 5 angeordnet. Ziel bei der Justierung ist es, ein zu einem Stift 52 passendes Bohrungspaar 50 senkrecht zu den Stützen 8 auszurichten, was einer parallelen Ausrichtung der Rührflügel zu den Spaltenschlitzen 33 entspricht, ohne daß dabei eine Bedienperson Blickkontakt zur Muffe 49 haben muß, was auch schwer möglich ist, da sich die Muffe unter dem Motor befindet. Hierzu weist die Muffe 49 neben dem Bohrungspaar 50 ein weiteres gegenüberliegendes Bohrungspaar 51 auf.

Ist beim Drehvorgang die passende Bohrung 50 aufgrund der Antriebswellenführung für den Stift 52 nicht zugänglich, so kann auf jeden Fall in die Bohrungen 51 mit dem Stift 52 eingefahren werden. Die Bohrungen 51 sind jedoch für den Stift 52 zu groß, so daß dieser wackelt. Die Bedienperson weis somit, daß sie sich in einer Bohrung 52 befindet, die lediglich zum Weiterdrehen dient, bis eine Bohrung 51 frei zugänglich ist und mit dem passend eingesetzten Stift 52 senkrecht ausgerichtet werden kann.

Eine weitere Variante die Rührflügel beispielsweise eines Schweinegüllemixers vor dem Herausziehen aus Spaltenschlitzen eines Spaltenbodens in eine parallele Position zu bringen, ist in den Fig. 12a bis 12c dargestellt. Der beispielhaft abgebildete Schweinegüllemixer 110 weist dazu eine kastenförmige Einheit 111 mit Abdeckklappe 112 unmittelbar unterhalb eines Motors 113 für den Antrieb einer Rühreinrichtung auf. Die Kasteneinheit 111 wird dabei von der vom Motor 113 angetriebenen Antriebswelle 114 durchdrungen. In der Kasteneinheit 111 dreht sich eine auf der Antriebswelle 114 angebrachte Positionierscheibe 115 (siehe Fig. 12c). An der Positionierscheibe 115 sind beispielsweise zwei Einkerbungen 116 an diametral gegenüberliegenden Stellen der Positionierscheibe 115 vorgesehen. Die Positionierscheibe 115 steht über einen Schlitz 117 teilweise aus der Kasteneinheit 111 heraus. Dieser überstehende Positionierscheibenanteil wird bei Betrieb des Schweinegüllemixers durch die entsprechend gewölbte Abdeckklappe 112 verdeckt.

Um die Rührflügel des Schweinegüllemixers vor dem Herausnehmen aus einem Spaltenschlitz parallel auszurichten, wird die Klappe 112 geöffnet und die Einkerbung 116 mittig in den Schlitz 117 gebracht. Diese Position stimmt dann mit der parallelen Ausrichtung der Rührflügel überein. Selbstverständlich können eine Vielzahl anderer Markierungsmöglichkeiten auf der Positionierungsscheibe zum Einsatz kommen.

Um zu verhindern, daß die Abdeckklappe 112 während des Betriebs nicht einfach geöffnet wird, und darüber hinaus die Abdeckklappe nur ganz bewußt geöffnet wird, sind zwei Sicherheitseinrichtungen vorgesehen, welche für die Klappenöffnung betätigt werden müssen.

Diese Sicherheitseinrichtungen sind in Figur 12b schematisch gezeigt. Einerseits handelt es sich um einen gefederten Hebel 122, der in einen Spalt zwischen Abdeckklappe 112 und Kasteneinheit 111 eingreift und damit das Öffnen der Abdeckklappe 112 blockiert, sofern dieser nicht aus dem Spalt ausgeschwenkt ist. Weiterhin ist ein in einer Öse 118 gelagertes Stiftelement 119 vorgesehen, welches durch eine weitere an der Abdeckklappe angeordnete Öse 120 geführt ist. Das Stiftelement 119 weist eine widerhakenähnliche Abspreizung 121 auf, welche normalerweise beim Versuch die Abdeckklappe zu öffnen an der Öse 120 anschlägt. Das Stiftelement 119 ist jedoch nachgiebig und die Abspreizung 121 so dimensioniert, daß sie grundsätzlich durch die Öse 120 paßt, so daß durch leichtes Verbiegen im elastischen Bereich des Stiftelements 119 die Abspreizung 121 durch die Öse 120 geführt werden kann und sich somit die Abdeckklappe 112 öffnen läßt.

### Bezugszeichenliste:

- 3: Motor
- 4: Rühreinrichtung
- 5: Antriebswelle
- 6: Antriebswellenführung
- 7: Rührflügel
- 8: Stütze
- 9: Lagereinheit
- 27: Rührflügelpaar
- 28: Achse
- 29: Außenkonturabschnitt
- 30: Drehachse
- 31: Aufnahmeeinheit
- 32: Spaltenboden
- 33: Spaltenschlitze
- 34: Schweinegüllemixer
- 35: Führungsrahmen
- 36: Führungsrohr
- 37: Basisteil
- 38: Kurbeleinrichtung
- 39: Anschlag
- 40: Achse
- 41: Arretierungsmittel
- 42: Räderpaar
- 43: Radachse
- 44: Stütze
- 45: Stützradpaar
- 46: Rührflügel
- 47: Achse
- 48: Schraubenmittel
- 49: Muffe
- 50: Bohrung
- 51: Bohrung
- 52: Stift
- 53: Stellschraube
- 54: Hülse
- 55: Kontermutter
- 56: Transporteinrichtung
- 57: Einklinkeinheit
- 58: Räderpaar
- 59: Achse
- 60: Stütze
- 61: V-förmiges Lager
- 70: Schweinegüllenmixer
- 71: Führungsrahmen
- 72: Stellrahmen
- 73: Rad
- 74: Gestell
- 75 - 78: Transportrollen
- 79: Zapfenelement
- 80: Zapfenelement
- 81 - 84: Lagerarm
- 90: Schweinegüllemixer
- 91: Stellrahmen
- 92: Transportgestell
- 93: Schwenkachse
- 94: Hakenelement
- 95: Hebelmechanismus
- 96 - 98: Lagerarm
- 99 - 101: Transportrolle
- 102: Haken
- 103: Bolzen
- 104: Achse
- 105: Rad
- 106: Arretierungsmittel
- 110: Schweinegüllemixer
- 111: Kasten
- 112: Abdeckklappe
- 113: Motor
- 114: Antriebswelle
- 115: Positionierscheibe
- 116: Einkerbung
- 117: Schlitz
- 118: Öse
- 119: Stiftelement
- 120: Öse
- 121: Abspreizung
- 122: Hebel

## Patentansprüche

1. Vorrichtung zum Homogenisieren von Gülle mit einem Führungsrahmen (35), an dem ein Motor (3) und eine Rühreinrichtung (4) über ein Basisteil (37) höhenverstellbar angebracht sind, wobei die Rühreinrichtung eine mit dem Motor verbundene Antriebswelle (5) und Rührflügel (7) am Ende der Antriebswelle umfaßt, und wobei die Rühreinrichtung derart ausgebildet ist, daß sie als schwertförmige Anordnung in schlitzförmige Öffnungen (12) von Spaltenböden in Ställen für Rinder und/oder Schweine, bei welchen die Schlitzlänge die Schlitzbreite deutlich übersteigt, einführbar ist, **dadurch gekennzeichnet, daß** eine Antriebswellenführung (6) vorgesehen ist, die bei einer Höhenverstellung sich mit der Rühreinrichtung mitbewegt und wenigstens eine am Basisteil und/oder Motor befestigte Stütze (8) mit wenigstens einer Lagereinheit (9) für die Antriebswelle umfasst, welche Lagereinheit und Stütze in die schlitzförmigen Öffnungen miteinführbar sind und dass die Lagereinheit (9) vom Motor (3) in Richtung Rührflügel (7) betrachtet vor den Rührflügeln (7) liegt, so daß die Rührflügel ohne zusätzliche Umrahmung angeordnet sind.

2. Vorrichtung nach Anspruch 1, **dadurch gekennzeichnet, daß** die Stütze nicht über die Rührflügel hinausgeführt ist und die Antriebswelle nicht umschließt sowie mit der Antriebswelle in einer Ebene liegt.

3. Vorrichtung nach Anspruch 1 oder 2, **dadurch gekennzeichnet, daß** eine Lagereinheit (9) für die Antriebswelle (5) am Ende der wenigstens einen Stütze (8) vorgesehen ist.

4. Vorrichtung nach einem der Ansprüche 1 oder 2, **dadurch gekennzeichnet, daß** die Stütze (8) bis in den Bereich der Rührflügel (27) geführt ist.

5. Vorrichtung nach Anspruch 4, **dadurch gekennzeichnet, daß** die Lagereinheit (9) am Ende der Antriebswelle (5) an eine Aufnahmeeinheit (31) für die Rührflügel (27) angrenzt und die aneinanderliegenden Flächen von Lagereinheit und Aufnahmeeinheit in der Achse der Antriebswelle betrachtet eine mehreckige Außenkontur, insbesondere eine dreieckige oder viereckige Außenkontur aufweisen.

6. Vorrichtung nach einem der vorhergehenden Ansprüche, **dadurch gekennzeichnet, daß** zwei Stützen (8) vorgesehen sind.

7. Vorrichtung nach einem der vorhergehenden Ansprüche, **dadurch gekennzeichnet, daß** Mittel (22, 23, 40, 41) zum Schwenken wenigstens der Rühreinrichtung (4) quer zur Längsrichtung der schlitzförmigen Öffnungen (12) im eingeführten Zustand vorgesehen sind.

8. Vorrichtung nach einem der vorhergehenden Ansprüche, **dadurch gekennzeichnet, daß** die Rühreinrichtung (4) zusammen mit dem Motor (3) schwenkbar ist.

9. Vorrichtung nach einem der vorhergehenden Ansprüche, **dadurch gekennzeichnet, daß** Mittel (53, 54, 55) zum schnellen Austauschen der Rührflügel vorgesehen sind.

10. Vorrichtung nach einem der vorhergehenden Ansprüche, **dadurch gekennzeichnet, daß** die Rührflügel auf wenigstens einer Achse (28) aus einer flächigen Stellung begrenzt schwenkbar gelagert sind.

11. Vorrichtung nach Anspruch 10, **dadurch gekennzeichnet, daß** der Grad der Ausschwenkung der Rührflügel (27, 46) in verschiedenen Drehrichtungen der Antriebswelle unterschiedlich groß ist.

12. Vorrichtung nach einem der vorhergehenden Ansprüche, **dadurch gekennzeichnet, daß** die Außenkontur (29) der Rührflügel im aufgeklappten Zustand wenigstens abschnittsweise im wesentlichen die Form eines Kreises aufweist, dessen Mittelpunkt auf der Drehachse (30) liegt.

13. Vorrichtung nach einem der vorhergehenden Ansprüche, **dadurch gekennzeichnet, daß** die in Strömungsrichtung liegenden Außenkonturbereiche (29) der Rührflügel im aufgeklapptem Zustand eine Aufkantung wenigstens zu einer Seitenfläche eines Flügels aufweisen.

14. Vorrichtung nach einem der vorhergehenden Ansprüche, **dadurch gekennzeichnet, daß** der Führungsrahmen mit einer Rundrohrführung (36) ausgestattet ist.

15. Vorrichtung nach Anspruch 14, **dadurch gekennzeichnet, daß** die Rohrführung verstellbare Begrenzungen nach oben und/oder unten zur Positionierung von Motor und Rühreinrichtung besitzt.

16. Vorrichtung nach einem der vorhergehenden Ansprüche, **dadurch gekennzeichnet, daß** bei einer Kippung der Anordnung Motor (3), Rühreinrichtung (4) und Führungsrahmen (35) quer zu den Spaltenholmen bzw. -schlitzen beim oder vor dem Herausziehen der Rühreinrichtung aus einem Spaltenschlitz, die Vorrichtung so ausgelegt ist, daß die Anordnung automatisch in eine senkrechte Position bringbar und in dieser arretierbar ist.

17. Vorrichtung nach einem der vorhergehenden Ansprüche, **dadurch gekennzeichnet, daß** Mittel zum Kippen der Rühreinrichtung (4) in Längsrichtung der schlitzförmigen Öffnungen (33) vorgesehen sind.

18. Vorrichtung nach Anspruch 17, **dadurch gekennzeichnet, daß** die Mittel eine Aufständerung auf einer Seite und/oder in der Mitte im unteren Bereich am Führungsrahmen (35) umfassen.

19. Vorrichtung nach Anspruch 17, **dadurch gekennzeichnet, daß** die Mittel eine Kippeinheit am Basisteil (37) umfassen.

20. Vorrichtung nach einem der vorhergehenden Ansprüche, **dadurch gekennzeichnet, daß** im unteren Endbereich des Führungsrahmens (71) wenigstens zwei Transportrollen vorgesehen sind.

21. Vorrichtung nach Anspruch 20, **dadurch gekennzeichnet, daß** wenigstens zwei Transportrollen (73, 105) an einem Stellrahmen (72, 91) angeordnet sind, der am Führungsrahmen (71) befestigt ist.

22. Vorrichtung nach Anspruch 20 oder 21, **dadurch gekennzeichnet, daß** wenigstens zwei Transportrollen (75 - 78, 99 - 101) an einem separaten Gestell (74, 92) angeordnet sind, welches mit dem Stellrahmen (72, 91) lösbar verbunden ist.

23. Vorrichtung nach einem der Ansprüche 20 bis 22, **dadurch gekennzeichnet, daß** das separate Gestell (92) derart ausgestaltet ist, daß es sich in Bezug auf den Stellrahmen (91) um eine Schwenkachse (93) kippen läßt.

24. Vorrichtung nach Anspruch 23, **dadurch gekennzeichnet, daß** eine Einrichtung (94, 95) vorhanden ist, mit welcher sich die Verkippung blockieren läßt.

25. Vorrichtung nach einem der Ansprüche 20 bis 24, **dadurch gekennzeichnet, daß** die Transportrollen (75 - 78, 99 - 101) an ausklappbaren und/oder ausschwenkbaren und/oder ausziehbaren Lagerarmen (81 - 84, 96 - 98) angeordnet sind, die in der jeweils ausgeklappten, ausgeschwenkten oder ausgezogenen Stellung arretierbar sind.

26. Vorrichtung nach einem der Ansprüche 20 bis 25, **dadurch gekennzeichnet, daß** die Transportrollen (75 - 78, 99 - 101) und/oder die Lagerarme (81 - 84, 96 - 98) lösbar mit dem Transportgestell (74, 92) und/oder Stellrahmen (72, 91) verbunden sind.

27. Vorrichtung nach einem der Ansprüche 20 bis 26, **dadurch gekennzeichnet, daß** die Transportrollen (75 - 78, 99 - 101) Lenkrollen sind.

28. Vorrichtung nach einem der Ansprüche 25 bis 27, **dadurch gekennzeichnet, daß** Lagerarme für vier Transportrollen derart in einer Ebene parallel zur Standfläche schwenkbar sind, daß jeweils zwei Transportrollen mittels der Lagerarme aneinander schiebbar sind.

29. Vorrichtung nach einem der vorhergehenden Ansprüche, **dadurch gekennzeichnet, daß** Mittel vorgesehen sind, über welche die Rührflügel in Längsrichtung der schlitzförmigen Öffnung beim Einführen und/oder Ausschwenken ausrichtbar sind.

30. Vorrichtung nach einem der vorhergehenden Ansprüche, **dadurch gekennzeichnet, daß** die Antriebswelle (5) am rührflügelseitigen Ende über die Rührflügel vorsteht.

31. Vorrichtung nach einem der vorhergehenden Ansprüche, **dadurch gekennzeichnet, daß** eine zusätzliche Transporteinrichtung (56) mit Einklinkeinheit (57) und Räderpaar (58) zum Transport der Vorrichtung anbringbar ist.

32. Vorrichtung nach einem der vorhergehenden Ansprüche, **dadurch gekennzeichnet, daß** die Breite der Rühreinrichtung (4) in Längsrichtung der schlitzförmigen Öffnungen betrachtet kleiner ist als die Breite der in gleicher Weise ausgerichteten Rührflügel.

33. Vorrichtung nach einem der vorhergehenden Ansprüche, **dadurch gekennzeichnet, daß** die wenigstens eine am Basisteil und/oder Motor befestigte Stütze (8) und die mit dem Motor verbundene Antriebswelle derart ausgestaltet sind, daß sie austauschbar sind.

34. Vorrichtung nach einem der vorhergehenden Ansprüche, **dadurch gekennzeichnet, daß** die wenigstens eine am Basisteil und/oder Motor befestigte Stütze (8) einen Fluidanschluß und wenigstens eine Fluidaustrittsöffnung umfaßt, wobei der Fluidanschluß und die Fluidaustrittsöffnung innerhalb der Stütze miteinander in Verbindung stehen.

35. Vorrichtung nach Anspruch 34, **dadurch gekennzeichnet, daß** die wenigstens eine Fluidaustrittsöffnung im Bereich der Lagereinheit (9) der Antriebswelle angeordnet ist.

## Claims

1. Device for homogenising liquid manure with a guide frame (35), to which a motor (3) and an agitator (4) are attached in a height adjustable manner via a base part (37), the agitator comprising a drive shaft (5) connected to the motor and agitator blades (7) at the end of the drive shaft, and the agitator being designed in such a way that it can be introduced, as a sword-shaped arrangement, into slot-shaped apertures (12) of slotted floors in stalls for cattle and/or pigs, in which the slot length significantly exceeds the slot width, **characterised in that** a drive shaft guide (6) is provided which moves with the agitator when there is a height adjustment and comprises at least one support (8) fastened to the base part and/or motor with at least one bearing unit (9) for the drive shaft, which bearing unit and support can be simultaneously introduced into the slot-shaped apertures and **in that** the bearing unit (9) of the motor (3), viewed in the direction of the agitator blades (7), is located upstream from the agitator blades (7), so the agitator blades are arranged without additional framing.

2. Device according to claim 1, **characterised in that** the support is not extended beyond the agitator blades and does not enclose the drive shaft and is located in one plane with the drive shaft.

3. Device according to claim 1 or 2, **characterised in that** a bearing unit (9) for the drive shaft (5) is provided and the end of the at least one support(8).

4. Device according to any one of claims 1 or 2, **characterised in that** the support (8) extends into the region of the agitator blades (27).

5. Device according to claim 4, **characterised in that** the bearing unit (9) at the end of the drive shaft (5) adjoins a receiving unit (31) for the agitator blades (27) and the adjacent faces of bearing unit and receiving unit, viewed in the axis of the drive shaft, have a polygonal external contour, in particular a triangular or square external contour.

6. Device according to any one of the preceding claims, **characterised in that** two supports (8) are provided.

7. Device according to any one of the preceding claims, **characterised in that** means (22, 23, 40, 41) are provided for pivoting at least the agitator (4) transverse to the longitudinal direction of the slot-shaped apertures (12) in the introduced state.

8. Device according to any one of the preceding claims, **characterised in that** the agitator (4) can be pivoted together with the motor (3).

9. Device according to any one of the preceding claims, **characterised in that** means (53, 54, 55) are provided for the quick exchange of the agitator blades.

10. Device according to any one of the preceding claims, **characterised in that** the agitator blades are mounted so as to be pivotal to a limited extent from a flat position on at least one axis (28).

11. Device according to claim 10, **characterised in that** the degree of swivelling of the agitator blades (27, 46) is different in size in different directions of rotation of the drive shaft.

12. Device according to any one of the preceding claims, **characterised in that** in the unfolded state the external contour (29) of the agitator blades at least in portions has substantially the shape of a circle, the central point of which is on the axis of rotation (30).

13. Device according to any one of the preceding claims, **characterised in that** in the unfolded state the external contour regions (29) of the agitator blades located in the flow direction have a bevelled edge at least with respect to a lateral face of a blade.

14. Device according to any one of the preceding claims, **characterised in that** the guide frame is equipped with a round tubular guide (36).

15. Device according to claim 14, **characterised in that** the tubular guide has adjustable limits at the top and/or bottom for positioning the motor and agitator.

16. Device according to any one of the preceding claims, **characterised in that** when the arrangement motor (3), agitator (4) and guide frame (35) is tilted transversely to the slatting bars or slots during or prior to removal of the agitator from a slatting slot, the device is designed such that the arrangement can automatically be brought into a vertical position and locked therein.

17. Device according to any one of the preceding claims, **characterised in that** means are provided for tilting the agitator (4) in the longitudinal direction of the slot-shaped apertures (33).

18. Device according to claim 17, **characterised in that** the means comprise a stand on one side and/or in the middle in the lower region on the guide frame (35).

19. Device according to claim 17, **characterised in that** the means comprise a tilting unit on the base part (37).

20. Device according to any one of the preceding claims, **characterised in that** provided in the lower end region of the guide frame (71) are at least two conveying rollers.

21. Device according to claim 20, **characterised in that** at least two conveying rollers (73, 105) are arranged on an adjusting frame (72, 91) fastened to the guide frame (71).

22. Device according to claim 20 or 21, **characterised in that** at least two conveying rollers (75 to 78, 99 to 101) are arranged on a separate mount (74, 92) detachably connected to the adjusting frame (72, 91).

23. Device according to any one of claims 20 to 22, **characterised in that** the separate mount (92) is designed in such a way that it can be tilted about a pivot axis (93) with respect to the adjusting frame (91).

24. Device according to claim 23, **characterised in that** an apparatus (94, 95) is provided allowing the tilting to be blocked.

25. Device according to any one of claims 20 to 24, **characterised in that** the conveying rollers (75 to 78, 99 to 101) are arranged on bearing arms (81 to 84, 96 to 98) which can be folded out and/or pivoted out and/or drawn out and which can be locked in the respective folded-out, pivoted-out or drawn-out position.

26. Device according to any one of claims 20 to 25, **characterised in that** the conveying rollers (75 to 78, 99 to 101) and/or the bearing arms (81 to 84, 96 to 98) are detachably connected to the conveying frame (74, 92) and/or adjusting frame (72, 91).

27. Device according to any one of claims 20 to 26, **characterised in that** the conveying rollers (75 to 78, 99 to 101) are guide rollers.

28. Device according to any one of claims 25 to 27, **characterised in that** the bearing arms for four conveying rollers can be pivoted in a plane parallel to the floor space such that two respective conveying rollers can be displaced toward one another by means of the bearing arms.

29. Device according to any one of the preceding claims, **characterised in that** means are provided via which the agitator blades can be aligned in the longitudinal direction of the slot-shaped aperture during introduction and/or pivoting out.

30. Device according to any one of the preceding claims, **characterised in that** the drive shaft (5) projects beyond the agitator blades on the agitator blade-side end.

31. Device according to any one of the preceding claims, **characterised in that** an additional conveying device (56) with a latching unit (57) and a pair of wheels (58) can be attached to convey the device.

32. Device according to any one of the preceding claims, **characterised in that** the width of the agitator (4), viewed in the longitudinal direction of the slit-shaped apertures, is smaller than the width of the identically aligned agitator blades.

33. Device according to any one of the preceding claims, **characterised in that** the at least one support (8) fastened to the base part and/or motor and the drive shaft connected to the motor are designed in such a way that they can be exchanged.

34. Device according to any one of the preceding claims, **characterised in that** the at least one support (8) fastened to the base part and/or motor comprises a fluid connection and at least one fluid discharge aperture, the fluid connection and the fluid discharge aperture being connected to one another inside the support.

35. Device according to claim 34, **characterised in that** the at least one fluid discharge aperture is arranged in the region of the bearing unit (9) of the drive shaft.

## Revendications

1. Dispositif pour homogénéiser du lisier, comportant un cadre de guidage (35) sur lequel sont agencés un moteur (3) et un dispositif d'agitation (4) de façon réglable en hauteur par l'intermédiaire d'une partie de base (37), le dispositif d'agitation comportant un arbre d'entraînement (5) relié au moteur et des ailettes d'agitation (7) à l'extrémité de l'arbre d'entraînement, et le dispositif d'agitation étant réalisé de sorte qu'il peut être introduit comme agencement sous forme de losange dans des ouvertures en forme de fentes (12) de caillebotis dans des étables pour des boeufs et/ou des porcs, la longueur des fentes dépassant de façon notable la largeur des fentes,
**caractérisé en ce qu'**un guide d'arbre d'entraînement (6) est prévu qui, lors d'un réglage en hauteur, se déplace avec le dispositif d'agitation et comporte au moins un montant (8) fixé à la partie de base et/ou au moteur avec au moins une unité de support (9) pour l'arbre d'entraînement, laquelle unité de support et lequel montant peuvent être introduits dans les ouvertures en forme de fentes, et **en ce que** l'unité de support (9), considérée du moteur (3) en direction des ailettes d'agitation (7), se trouve avant les ailettes d'agitation (7), de sorte que les ailettes d'agitation sont agencées sans encadrement supplémentaire.

2. Dispositif selon la revendication 1,
**caractérisé en ce que** le montant n'est pas guidé au-delà des ailettes d'agitation et n'entoure pas l'arbre d'entraînement, et se trouve avec l'arbre d'entraînement dans un plan.

3. Dispositif selon la revendication 1 ou 2,
**caractérisé en ce qu'**une unité de support (9) pour l'arbre d'entraînement (5) est prévue à l'extrémité du montant (8).

4. Dispositif selon une des revendications 1 ou 2,
**caractérisé en ce que** le montant (8) est guidé jusque dans la zone des ailettes d'agitation (27).

5. Dispositif selon la revendication 4,
**caractérisé en ce que** l'unité de support (9), à l'extrémité de l'arbre d'entraînement (5), est adjacente à une unité de réception (31) pour les ailettes d'agitation (27), et les surfaces adjacentes de l'unité de support et de l'unité de réception, considérées suivant l'axe de l'arbre d'entraînement, présentent un contour externe polygonal, en particulier un contour externe triangulaire ou rectangulaire.

6. Dispositif selon une des revendications précédentes,
**caractérisé en ce que** deux montants (8) sont prévus.

7. Dispositif selon une des revendications précédentes,
**caractérisé en ce que** des moyens (22, 23, 40, 41) pour le pivotement d'au moins le dispositif d'agitation (4) sont prévus transversalement à la direction longitudinale des ouvertures en forme de fentes (12) dans l'état introduit.

8. Dispositif selon une des revendications précédentes,
**caractérisé en ce que** le dispositif d'agitation (4) peut pivoter en même temps que le moteur (3).

9. Dispositif selon une des revendications précédentes,
**caractérisé en ce que** des moyens (53, 54, 55) sont prévus pour l'échange rapide des ailettes d'agitation.

10. Dispositif selon une des revendications précédentes,
**caractérisé en ce que** les ailettes d'agitation sont montées en pouvant pivoter de façon limitée hors d'une position plane sur au moins un axe (28).

11. Dispositif selon la revendication 10,
**caractérisé en ce que** le degré du pivotement des ailettes d'agitation (27, 46) est différent dans différents sens de rotation de l'arbre d'entraînement.

12. Dispositif selon une des revendications précédentes,
**caractérisé en ce que** le contour externe (29) des ailettes d'agitation, dans l'état déplié, présente au moins par tronçon généralement la forme d'un cercle, dont le centre se trouve sur l'axe de rotation (30).

13. Dispositif selon une des revendications précédentes,
**caractérisé en ce que** les zones de contour externe (29), se trouvant dans la direction d'écoulement, des ailettes d'agitation, dans l'état déplié, présentent un rabat au moins par rapport à une surface latérale d'une ailette.

14. Dispositif selon une des revendications précédentes,
**caractérisé en ce que** le cadre de guidage est équipé d'un guide tubulaire rond (36).

15. Dispositif selon la revendication 14,
**caractérisé en ce que** le guide tubulaire possède des limitations réglables vers le haut et/ou vers le bas pour le positionnement du moteur et du dispositif d'agitation.

16. Dispositif selon une des revendications précédentes,
**caractérisé en ce que**, lors d'un basculement de l'agencement, moteur (3), dispositif d'agitation (4) et cadre de guidage (35), transversalement aux fentes où longerons lors du retrait, ou avant celui-ci, du dispositif d'agitation d'une fente, le dispositif est dimensionné de sorte que l'agencement peut être amené automatiquement dans une position verticale et être bloqué dans celle-ci.

17. Dispositif selon une des revendications précédentes,
**caractérisé en ce que** des moyens pour basculer le dispositif d'agitation (4) sont prévus en direction longitudinale des ouvertures en forme de fentes (33).

18. Dispositif selon la revendication 17,
**caractérisé en ce que** les moyens présentent un piétement sur un côté et/ou au centre dans la zone inférieure sur le cadre de guidage (35).

19. Dispositif selon la revendication 17,
**caractérisé en ce que** les moyens comportent une unité de basculement sur la partie de base (37).

20. Dispositif selon une des revendications précédentes,
**caractérisé en ce que**, dans la zone d'extrémité inférieure du cadre de guidage (71), au moins deux rouleaux de transport sont prévus.

21. Dispositif selon la revendication 20,
**caractérisé en ce qu'**au moins deux rouleaux de transport (73, 105) sont agencés sur un cadre de réglage (72, 91), qui est fixé au cadre de guidage (71).

22. Dispositif selon la revendication 20 ou 21,
**caractérisé en ce qu'**au moins deux rouleaux de transport (75-78 , 99-101) sont agencés sur un bâti séparé (74, 92), qui est relié de façon amovible au cadre de réglage (72, 91).

23. Dispositif selon une des revendications 20 à 22,
**caractérisé en ce que** le bâti séparé (92) est réalisé de sorte qu'il peut basculer relativement au cadre de réglage (91) autour d'un axe de pivotement (93).

24. Dispositif selon la revendication 23,
**caractérisé en ce qu'**il est prévu un dispositif (94, 95) grâce auquel le basculement peut être bloqué.

25. Dispositif selon une des revendications 20 à 24,
**caractérisé en ce que** les rouleaux de transport (75-78, 99-101) sont agencés sur des bras de support (81-84, 96-98) basculants et/ou pivotants et/ou pouvant être retirés, qui peuvent être bloqués dans la position à chaque fois basculée, pivotée ou retirée.

26. Dispositif selon une des revendications 20 à 25,
**caractérisé en ce que** les rouleaux de transport (75-78, 99-101) et/ou les bras de support (81-84, 96-98) sont reliés de façon amovible au bâti de transport (74, 92) et/ou au cadre de réglage (72, 91).

27. Dispositif selon une des revendications 20 à 26,
**caractérisé en ce que** les rouleaux de transport (75-78, 99-101) sont des rouleaux de guidage.

28. Dispositif selon une des revendications 25 à 27,
**caractérisé en ce que** des bras de support pour quatre rouleaux de transport peuvent pivoter dans un plan parallèlement à la surface de sustentation, de sorte que, à chaque fois, deux rouleaux de transport peuvent être poussés l'un contre l'autre au moyen des bras de support.

29. Dispositif selon une des revendications précédentes,
**caractérisé en ce que** des moyens sont prévus, grâce auxquels les ailettes d'agitation peuvent être orientées en direction longitudinale de l'ouverture en forme de fente lors de l'introduction et/ou du pivotement.

30. Dispositif selon une des revendications précédentes,
**caractérisé en ce que** l'arbre d'entraînement (5), à l'extrémité du côté des ailettes d'agitation, fait saillie des ailettes d'agitation.

31. Dispositif selon une des revendications précédentes,
**caractérisé en ce qu'**un dispositif de transport supplémentaire (56) peut être prévu avec une unité d'enclenchement (57) et une paire de roues (58) pour le transport du dispositif.

32. Dispositif selon une des revendications précédentes,
**caractérisé en ce que** la largeur du dispositif d'agitation (4), considérée dans la direction longitudinale des ouvertures en forme de fentes, est plus petite que la largeur des ailettes d'agitation orientées de la même façon.

33. Dispositif selon une des revendications précédentes,
**caractérisé en ce que** le montant (8) fixé à la partie de base et/ou au moteur et l'arbre d'entraînement relié au moteur sont réalisés de sorte qu'ils peuvent être échangés.

34. Dispositif selon une des revendications précédentes,
**caractérisé en ce que** le montant (8) fixé à la partie de base et/ou au moteur comporte un raccord de fluide et au moins une ouverture de sortie de fluide, le raccord de fluide et l'ouverture de sortie de fluide étant reliés l'un à l'autre à l'intérieur du montant.

35. Dispositif selon la revendication 34,
**caractérisé en ce que** l'ouverture de sortie de fluide est agencée dans la zone de l'unité de support (9) de l'arbre d'entraînement.
